**Europäisches Patentamt**

**European Patent Office**

**Office européen des brevets**

(11) Veröffentlichungsnummer: **0 251 173**
**A2**

(12) # EUROPÄISCHE PATENTANMELDUNG

(21) Anmeldenummer: **87109057.7**

(22) Anmeldetag: **24.06.87**

(51) Int. Cl.4: **E04B 1/94 , B32B 15/08**

(30) Priorität: **27.06.86 DE 3621684**

(43) Veröffentlichungstag der Anmeldung:
**07.01.88 Patentblatt 88/01**

(84) Benannte Vertragsstaaten:
**AT BE CH DE ES FR GB IT LI NL SE**

(71) Anmelder: **Dr. Wolman GmbH**
**Dr.-Wolman-Strasse 31-33**
**D-7573 Sinzheim(DE)**

(72) Erfinder: **Heidenreich, Hans-Peter**
**Heiligensteinstrasse 3**
**D-7570 Baden-Baden(DE)**
Erfinder: **Marx, Hans-Norbert**
**Mozartweg 8**
**D-7580 Buehl-Weitenung(DE)**

(74) Vertreter: **Mutzbauer, Helmut, Dr. et al**
**Carl-Bosch-Strasse 38**
**D-6700 Ludwigshafen(DE)**

(54) **Brandschutzbahn mit integrierter Dampfsperre.**

(57) Brandschutzbahn mit integrierter Dampfsperre zur Auskleidung von Boden-, Dach-und/oder Wandflächen aus einer beidseitig mit einer Kunststoffolie und einem Glasvlies kaschierten Trägerbahn aus Metallfolie (3), dadurch gekennzeichnet, daß die eine Seite der Metallfolie (3) in an sich bekannter Weise mit einem schaumschichtbildenden, Wasser- und Stickgase abspaltenden Feuerschutzmittel (4), und die andere Seite der Metallfolie (3) mit einem wasserbeständigen und wasserabspaltenden Feuerschutzmittel (5) beschichtet ist.

EP 0 251 173 A2

## Brandschutzbahn mit integrierter Dampfsperre

Die vorliegende Erfindung betrifft eine Brandschutzbahn mit integrierter Dampfsperre zur Auskleidung von Boden-, Dach-und/oder Wandflächen aus einer beidseitig mit einer Kunststoffolie und einem Glasvlies kaschierten Trägerbahn aus Metallfolie.

Es ist bekannt, das Brandverhalten von an sich brennbaren Boden-, Dach-oder Wandbahnen durch Unterlegung mit Brandschutzbahnen zu verbessern. Dabei werden vorwiegend unbrennbare Materialien, wie Asbest-, Glas-oder Fasermineralmatten und/oder -platten verwendet, die rein passiv den Durchbrand durch die Verbundsysteme verzögern.

Daneben gibt es Materialien, die chemisch gebundenes Wasser enthalten, wie z.B. Gipsfaseroder Gipskartonplatten.

Im Brandfall wird der passive Feuerwiderstand durch das Abspalten von Wasser aktiv unterstützt. Der Brandherd wird dabei durch das verdampfende Wasser abgekühlt und vom entstehenden Wasserdampf gegenüber dem Luftsauerstoff abgeschirmt.

Dieser sogenannte aktive Brandschutz kann noch weiter gesteigert werden, indem die Brandschutzbahnen mit Intumeszenzmaterialien, d.h. mit schaumschichtbildenden Feuerschutzmitteln versehen sind.

In der DE-OS 32 20 821 wird eine brandgeschützte Dichtungsbahn beschrieben, bei der das auf einem anorganischen Trägermaterial aufgebrachte Intumeszenzmaterial das Durchbrennen der an sich brennbaren Dichtungsbahn und ein flächiges Ausbreiten des Brandes verhindert.

Bei der Erprobung des Gegenstandes der DE-OS 32 20 821 wurde in Zusammenarbeit mit einer großen Versicherungsgesellschaft eine Reihe von Großbrandversuchen durchgeführt. Dabei zeigten die Intumeszenzbrandschutzbahnen auch unter mehrlagigen, brennbaren Polymerbitumenbahnen einen außergewöhnlichen Feuerwiderstand. Dieser unerwartet starke Schutzeffekt läßt sich durch eine Wirkungsweise von Intumeszenzmaterialien (Abspalten von Wasserdampf und unbrennbaren Gasen, Bildung einer aufgeschäumten Dämmschicht) allein nicht erklären. Offenbar verhindert die Dichtungsbahn das Entweichen des heißen Wasserdampfes und der Stickgase, die dann in den weitergelegenen Zonen das dort vorhandene Intumeszenzmaterial initiieren, sich dabei abkühlen und verstärkt durch die neu entstandenen Mengen von Wasserdampf und Stickgasen an den Brandherd zurückkehren. Durch diese Retention werden beachtliche Wärmemengen dem Brandherd entzogen.

Entsprechende Versuche haben gezeigt, daß dieser Retentionseffekt auch dann gegeben ist, wenn anstelle der Bitumendichtungsbahn andere Dichtungsbahnen, z.B. aus Metallfolien, verwendet werden.

Die Verwendung einer derartigen Kombination ist aus der DE-OS 34 09 897 bekannt. Hierin wird eine Brandschutzbahn mit Dampfsperre zum Belegen von Dach-und Wandflächen mit einer tragenden Bahn aus Aluminiumfolie verwendet, die beidseitig mit einer Kunststoffolie kaschiert ist, wobei auf einer Seite zusätzlich ein Glasvlies mit chemisch gebundenem Wasser aufkaschiert ist.

Diese Brandschutzbahn wurde unmittelbar auf Stahlprofilbleche, wie Stahltrapezbleche oder auf andere brandschutzbedürftige Unterkonstruktionen verlegt.

Entsprechende Großbrandversuche mit dieser bekannten Brandschutzbahn an der Technischen Universität Karlsruhe haben ergeben, daß auch bei Überdeckung der Brandschutzbahn mit brennbaren Dämmstoffen (Styropor) und brennbaren Polymer-Bitumendichtungsbahnen ein flächiger Durchbrand verhindert wird.

Die Funktionsfähigkeit und die Verwendung, insbesondere bei hochwertigen Bauten und Bauten, in denen sich viele Menschen aufhalten, wie z.B. Einkaufszentren, Versammlungshallen, Lagerhallen mit hochwertigen Gütern, Hotels, wurde damit eindeutig bewiesen.

Die bisherigen Erfahrungen mit der bekannten Brandschutzbahn bestätigen einerseits deren neuartige technische Möglichkeiten, andererseits zeigten sich in der Baupraxis eine Reihe von Nachteilen.

Insbesondere bei schlechter Wetterlage ist die Verlegung im Dachbereich problematisch, da die aktiven Brandschutzkomponenten wasseranfällig sind.

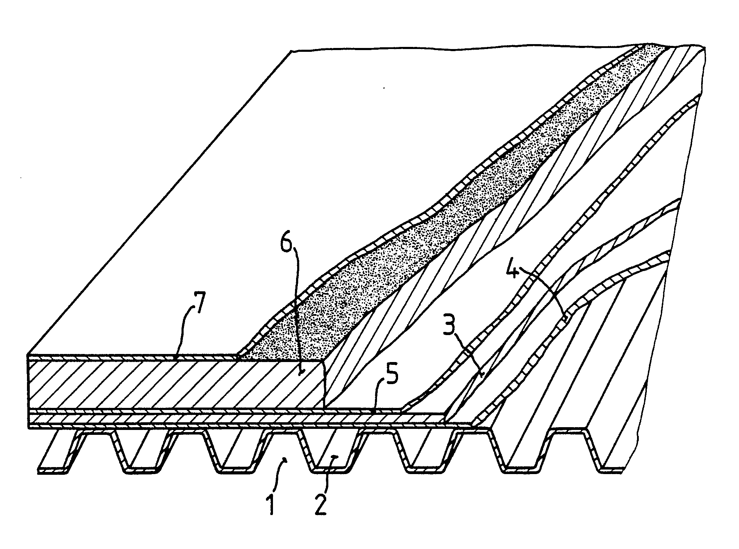

Die Verlegung erfolgt aber auf der tragenden Dachkonstrucktion, z.B. auf dem Stahltrapezblech mit nach oben liegender Brandschutzbahn (Seite 5, Zeile 16 und Figur 1 der DE-OS 34 09 897). Ein plötzlich eintretender Platzregen kann das Material der Intumeszenzbahnen aufweichen und bei längerer Einwirkung gegebenenfalls abschwämmen.

Dieser Gefahr soll durch eine zusätzliche Wachsschicht begegnet werden (Seite 4, Zeile 16-26 der DE-OS 34 09 897). Entsprechende Versuche haben aber gezeigt, daß für einen ausreichenden Wasserschutz derart große Mengen von brennbaren Wachsen auf die Brandschutzbahn aufgebracht werden müßten, daß dabei ihre Brandschutzfunktion darunter leiden würde.

Aufgrund ihrer Aufgabe und Konstruktion ist die bekannte Brandschutzbahn gemäß DE-OS 34 09 897 so beschaffen, daß das Brandgeschehen unterhalb der Dampfsperre nicht beeinflußt werden kann. Bei Temperatureinwirkung infolge eines Brandes von unten werden die Trapezbleche in Mitleidenschaft gezogen und bei Verwendung brennbarer Korrosionsanstriche oder Kleber (z.B Kaltbitumen) kann der weitere Brandverlauf negativ beeinflußt werden. Deshalb müssen gegebenenfalls zusätzliche Schutzmaßnahmen mit einem hohen technischen Aufwand erfolgen (Seite 4, Zeile 26-36 der DE-OS 34 09 897).

Die Wasserempfindlichkeit kann gegebenenfalls im Bereich mit Kondenswasser-oder Tauwasserbildung ein Aufweichen der Intumeszenzschicht zur Folge haben und es ist dann vorteilhaft, diese Schicht nach innen auszurichten. Hier muß bei ungünstigem Brandverlauf damit gerechnet werden, daß die kunststoffbeschichtete Aluminiumfolie gegebenenfalls zu schnell wegbrennt und damit die sich entwickelten Gase (Stickstoff und Wasserdampf) zu schnell freigesetzt werden.

Hiervon ausgehend stellt sich für die vorliegende Erfindung die Aufgabe, eine Brandschutzbahn mit integrierter Dampfsperre zu entwickeln, die beidseitig aktiv das Brandgeschehen beeinflussen kann und dabei die in der Baupraxis unumgängliche Wasserfestigkeit aufweist.

Diese Aufgabe wurde erfindungsgemäß dadurch gelöst, daß die eine Seite der Metallfolie in an sich bekannter Weise mit einem schaumschichtbildenden, Wasser-und Stickgase abspaltenden Feuerschutzmittel, und die andere Seite der Metallfolie mit einem wasserbeständigen und wasserabspaltenden Feuerschutzmittel beschichtet ist.

Eine vorteilhafte Ausgestaltung der Erfindung ist Gegenstand des Anspruchs 2.

Als multifunktionales Feuerschutzmittel werden handelsübliche Intumeszenzmaterialien, bekannt auch als dämmschichtbildende (DSB) Materialien, verwendet.

Unter Einwirkung von Hitze bildet sich ein Thermoschaum bei gleichzei tiger Abspaltung von Wasserdampf und Stickgasen. Neben der thermischen Isolierung entsteht durch abgespaltenes Wasser ein Kühleffekt und die Stickgase behindern den Zutritt von Sauerstoff zum Brandherd. Das auf der anderen Seite der Bahn aufgebrachte Feuerschutzmittel enthält wasserunlösliche und im Brandfall wasserabspaltende Extender, wie z.B. Aluminiumhydroxid.

Im Kühlhaus-, Boden-und Wandbereich erfolgt die Verlegung mit der wasserbeständigen Beschichtung nach außen. Im Dachbereich wird analog die wasserbeständige Schicht nach oben verlegt.

Im Brandfall entfaltet die Brandschutzbahn beidseitig ihre Wirksamkeit. Während oberhalb der sich aufblähenden Dämmschicht die Wasserdampfretention erheblich den Feuerwiderstand des Systems verstärkt, werden unterhalb der Dampfsperre beachtliche Mengen von Wasserdampf und Stickgasen in die Sicken geleitet.

Anhand der Zeichnung soll eine Verwendungsmöglichkeit der erfindungsgemäßen Brandschutzbahn erläutert werden.

Auf einem Trapezprofil 1 mit Hohlsicken 2 liegt die erfindungsgemäße Brandschutzdampfsperrbahn. Unterhalb der integrierten Metallfolie 3 befindet sich eine Brandschutzbahn 4 und oberhalb der Metallfolie 3 eine wasserbeständige Feuerschutzbahn 5.

Über der Brandschutzkombination 3, 4 und 5 befindet sich eine Dämmschicht 6, die wiederum von oben durch eine oder mehrere Lagen einer Dachdichtungsbahn 7 bedeckt ist. Im Brandfall werden von der Brandschutzbahn 4 Wasserdampf und Stickgase auch in die Hohlsicken 2 des Trapezprofils 1 abgegeben.

## Ansprüche

1. Brandschutzbahn mit integrierter Dampfsperre zur Auskleidung von Boden-, Dach-und/oder Wandflächen aus einer beidseitig mit einer Kunststoffolie und einem Glasvlies kaschierten Trägerbahn aus Metallfolie (3), dadurch gekennzeichnet, daß die eine Seite der Metallfolie (3) in an sich bekannter Weise mit einem schaumschichtbildenden, Wasser-und Stickgase abspaltenden Feuerschutzmittel (4), und die andere Seite der Metallfolie (3) mit einem wasserbeständigen und wasserabspaltenden Feuerschutzmittel (5) beschichtet ist.

2. Brandschutzbahn nach Anspruch 1, dadurch gekennzeichnet, daß die Metallfolie (3) aus VA-Stahl oder Aluminium besteht.